# EUROPÄISCHE PATENTANMELDUNG

(11) **EP 4 252 543 A1**
(43) Veröffentlichungstag der Anmeldung: **04.10.2023**
(21) Anmeldenummer: 23162857.9
(22) Anmeldetag: 20.03.2023
(51) Int. Cl.: A23L 2/54, A47J 31/40

(54) **GETRÄNKESPRUDLER**

(30) Priorität: 31.03.2022 DE 102022107698
(71) Anmelder: Jahn GmbH Umform- und Zerspanungstechnik, 99897 Tambach-Dietharz (DE)
(72) Erfinder: JAHN, Andreas, 99897 Tambach-Dietharz, (DE); ABE, Rico, 98597 Fambach (DE); ORTLEPP, Tobias, 98593 Floh-Seligenthal (DE); GLÄSER, Alexander, 98574 Schmalkalden OT Asbach, (DE); STEHR, Harald, 99887 Georgenthal (DE)
(74) Vertreter: Liedtke & Partner Patentanwälte

(57) **Zusammenfassung**

Die Erfindung betrifft einen Getränkesprudler (1) mit einer Grundeinheit, wobei die Grundeinheit aufweist:
- eine Druckbehälteraufnahme zur Aufnahme eines Druckbehälters (2),
- eine Getränkebehälteraufnahme (9) zur Aufnahme eines Getränkebehälters (3), und
- eine Betätigungseinheit (4) zum Öffnen einer fluidischen Verbindung zwischen dem in der Druckbehälteraufnahme angeordneten Druckbehälter (2) und dem in der Getränkebehälteraufnahme (9) angeordneten Getränkebehälter (3).

Erfindungsgemäß weist die Grundeinheit einen Standfuß (5) und ein Kopfteil (6) als separate Komponenten auf. Die Druckbehälteraufnahme zur Aufnahme des Druckbehälters (2) ist durch einen Druckbehälteraufnahmeteil (7) im Standfuß (5) und einen Druckbehälteraufnahmeteil (8) im Kopfteil (6) gebildet.

## Beschreibung

Die Erfindung betrifft einen Getränkesprudler nach den Merkmalen des Oberbegriffs des Anspruchs 1.

Aus dem Stand der Technik sind Getränkesprudler, auch als Wassersprudler oder Trinkwassersprudler bezeichnet, allgemein bekannt. Sie weisen eine Grundeinheit auf, in welche eine mit Kohlenstoffdioxid befüllte Gaskartusche und eine mit Wasser befüllte Flasche eingesetzt werden. Durch Betätigen einer Betätigungseinheit an der Grundeinheit wird das Kohlenstoffdioxid in die mit Wasser befüllte Flasche eingeleitet, wodurch das Wasser gesprudelt wird.

Der Erfindung liegt die Aufgabe zu Grunde, einen gegenüber dem Stand der Technik verbesserten Getränkesprudler anzugeben.

Die Aufgabe wird erfindungsgemäß gelöst durch einen Getränkesprudler mit den Merkmalen des Anspruchs 1.

Vorteilhafte Ausgestaltungen der Erfindung sind Gegenstand der Unteransprüche.

Ein Getränkesprudler, auch als Wassersprudler oder Trinkwassersprudler bezeichnet, weist eine Grundeinheit auf. Diese Grundeinheit umfasst eine Druckbehälteraufnahme zur Aufnahme eines Druckbehälters, eine Getränkebehälteraufnahme zur Aufnahme eines Getränkebehälters und eine Betätigungseinheit zum Öffnen einer fluidischen Verbindung zwischen dem in der Druckbehälteraufnahme angeordneten Druckbehälter und dem in der Getränkebehälteraufnahme angeordneten Getränkebehälter, wenn beide Behälter in der jeweiligen Aufnahme angeordnet sind. Der Druckbehälter wird auch als Druckgasbehälter, Gaskartusche, Zylinder oder Gaszylinder bezeichnet. Der Getränkebehälter ist insbesondere eine Flasche. Sind ein mit Gas, insbesondere mit Kohlenstoffdioxid, befüllter Druckbehälter und ein mit einem Getränk, insbesondere Wasser, insbesondere Trinkwasser, befüllter Getränkebehälter in der jeweiligen Aufnahme der Grundeinheit angeordnet, kann durch Betätigen der Betätigungseinheit an der Grundeinheit, wodurch die fluidische Verbindung zwischen dem in der Druckbehälteraufnahme angeordneten Druckbehälter und dem in der Getränkebehälteraufnahme angeordneten Getränkebehälter geöffnet wird, das Getränk im Getränkebehälter gesprudelt werden, da dann das Gas aus dem Druckbehälter in den Getränkebehälter einströmt.

Erfindungsgemäß weist die Grundeinheit einen Standfuß und ein Kopfteil als separate Komponenten auf. Insbesondere ist das Kopfteil flach ausgebildet. Die Druckbehälteraufnahme zur Aufnahme des Druckbehälters ist durch einen Druckbehälteraufnahmeteil im Standfuß und einen Druckbehälteraufnahmeteil im Kopfteil gebildet. Es ist somit insbesondere vorgesehen, dass diese separaten Komponenten der Grundeinheit, d. h. der Standfuß und das Kopfteil, nicht direkt miteinander verbunden sind. Insbesondere ist vorgesehen, dass sie ohne den Druckbehälter nicht miteinander verbunden sind, sondern, insbesondere ausschließlich, über den Druckbehälter miteinander verbunden sind, insbesondere ausschließlich über den Druckbehälter miteinander verbunden sind, wenn der Druckbehälter in der Druckbehälteraufnahme angeordnet ist.

Es ist daher in einer möglichen Ausführungsform vorgesehen, dass der Getränkesprudler auch den Druckbehälter aufweist. Dabei ist insbesondere vorgesehen, dass der Druckbehälter in der Druckbehälteraufnahme angeordnet ist, wobei der Standfuß und das Kopfteil über den Druckbehälter, insbesondere ausschließlich über den Druckbehälter, miteinander verbunden sind.

Die hier beschriebene Lösung ist insbesondere eine sehr einfache und ressourcensparende Ausfertigung des Getränkesprudlers. Dabei wird ein wichtiges Trägerelement, eine Standsäule, durch den Druckbehälter gebildet. Bei Getränkesprudlern aus dem Stand der Technik ist diese Standsäule ein integraler Bestandteil des Getränkesprudlers und entweder einteilig und/oder einstückig mit Standfußbereich und Kopfteilbereich ausgebildet oder fest mit diesen beiden Komponenten verbunden. Bei der hier beschriebenen Lösung entfällt diese zusätzliche Komponente, denn deren Funktion wird vollständig vom Druckbehälter übernommen. Der Druckbehälter erfüllt bei der beschriebenen Lösung somit zwei Funktionen, zusätzlich zu seiner eigentlichen Funktion als Behälter für das Gas zum Sprudeln des Getränks nun auch die Funktion des Trägerelements zum Verbinden des Standfußes und des Kopfteils. Durch diese Konzentration auf die absolut notwendigen Funktionselemente ist dieser Getränkesprudler besonders kostengünstig herstellbar. Zudem erfordert er dadurch nur einen sehr geringen Bauraum zum Aufstellen und ist somit auch in sehr kleinen Räumen, insbesondere Küchen, einsetzbar.

In einer möglichen Ausführungsform weist der Getränkesprudler auch den Getränkebehälter auf. Dabei ist insbesondere vorgesehen, dass der Getränkebehälter in der Getränkebehälteraufnahme angeordnet ist.

In einer möglichen Ausführungsform weist das Kopfteil einen einteilig und/oder einstückig ausgebildeten Körper und die Betätigungseinheit auf. D. h. die Betätigungseinheit gehört nicht zum einteilig und/oder einstückig ausgebildeten Körper, sondern ist an diesem angeordnet und betätigbar befestigt, d. h. insbesondere beweglich befestigt. Der einteilig und/oder einstückig ausgebildete Körper ist besonders einfach und zugleich besonders stabil herstellbar.

In einer möglichen Ausführungsform ist der Druckbehälteraufnahmeteil im Kopfteil einteilig und/oder einstückig mit dem Körper des Kopfteils ausgebildet. Dadurch werden Montagearbeiten reduziert, da der Druckbehälteraufnahmeteil im Kopfteil zusammen mit dem Körper des Kopfteils ausgebildet wird und somit nicht nachträglich montiert werden muss.

Insbesondere ist vorgesehen, dass die Getränkebehälteraufnahme vollständig im und/oder am Kopfteil ausgebildet oder angeordnet ist. D. h. der Getränkebehälter bildet keine Verbindung zwischen Kopfteil und Standfuß, sondern wird zum Sprudeln eines darin eingefüllten Getränks ausschließlich am Kopfteil befestigt. Insbesondere ist vorgesehen, dass die Getränkebehälteraufnahme nicht einteilig oder einstückig mit dem Körper des Kopfteils ausgebildet ist, sondern als ein separates Bauteil ausgebildet ist und am Körper des Kopfteils befestigt ist. Alternativ kann vorgesehen sein, dass die Getränkebehälteraufnahme einteilig und/oder einstückig mit dem Körper des Kopfteils ausgebildet ist.

In einer möglichen Ausführungsform weist die Getränkebehälteraufnahme ein Gewinde zum Einschrauben eines korrespondierenden Getränkebehälteranschlussgewindes, welches am Getränkebehälter angeordnet oder ausgebildet ist, auf. Sie ist somit als ein Einschraubanschluss für den Getränkebehälter ausgebildet. Das Getränkebehälteranschlussgewinde ist insbesondere in einem oberen Bereich des Getränkebehälters angeordnet oder ausgebildet, beispielsweise an einem Flaschenhals des als Flasche ausgebildeten Getränkebehälters. Das Gewinde der Getränkebehälteraufnahme ist beispielsweise ein Innengewinde und das korrespondierende Getränkebehälteranschlussgewinde ein Außengewinde. Durch die Gewindelösung wird eine sichere Befestigung des Getränkebehälters am Getränkesprudler zum Sprudeln des Getränks ermöglicht.

In einer alternativen möglichen Ausführungsform ist zur Aufnahme des Getränkebehälters ein Bajonettverschluss vorgesehen. Die Getränkebehälteraufnahme weist somit einen Teil dieses Bajonettverschlusses zum Verbinden mit einem korrespondierenden Teil des Bajonettverschlusses auf, welcher am Getränkebehälter angeordnet oder ausgebildet ist, insbesondere im oberen Bereich des Getränkebehälters, beispielsweise am Flaschenhals des als Flasche ausgebildeten Getränkebehälters. Auch durch diese Bajonettveschlusslösung wird eine sichere Befestigung des Getränkebehälters am Getränkesprudler zum Sprudeln des Getränks ermöglicht.

In einer alternativen möglichen Ausführungsform ist zur Aufnahme des Getränkebehälters eine Rastverbindung vorgesehen. Die Getränkebehälteraufnahme weist somit einen Teil dieser Rastverbindung zum Verbinden mit einem korrespondierenden Teil der Rastverbindung auf, welcher am Getränkebehälter angeordnet oder ausgebildet ist, insbesondere im oberen Bereich des Getränkebehälters, beispielsweise am Flaschenhals des als Flasche ausgebildeten Getränkebehälters. Auch durch diese Rastverbindungslösung wird eine sichere Befestigung des Getränkebehälters am Getränkesprudler zum Sprudeln des Getränks ermöglicht.

In einer möglichen Ausführungsform ist vorgesehen, dass der Druckbehälteraufnahmeteil im Kopfteil ein Gewinde zum Einschrauben eines korrespondierenden Druckbehälteranschlussgewindes, welches am Druckbehälter angeordnet oder ausgebildet ist, aufweist. In einer dazu alternativen möglichen Ausführungsform ist vorgesehen, dass der Druckbehälteraufnahmeteil im Kopfteil eine Einrastaufnahme zum Einschieben und Einrasten eines korrespondierenden Druckbehälteranschlusses, welcher am Druckbehälter ausgebildet oder angeordnet ist, aufweist. Beispielsweise weisen hierfür der Druckbehälteraufnahmeteil im Kopfteil und der Druckbehälter zueinander korrespondierende Rastverbindungsteile auf. Durch beide Varianten wird eine stabile Befestigung des Kopfteils am Druckbehälter sichergestellt.

In einer möglichen Ausführungsform weist der Druckbehälteraufnahmeteil im Standfuß mindestens ein Befestigungselement oder mehrere Befestigungselemente zur formschlüssigen und/oder kraftschlüssigen Befestigung des im Druckbehälteraufnahmeteil im Standfuß angeordneten Druckbehälters auf. Dadurch wird eine stabile Befestigung und Halterung des Druckbehälters im Standfuß und somit auch eine stabile Lagerung des Kopfteils über den Druckbehälter am Standfuß sichergestellt. Das Befestigungselement oder das jeweilige Befestigungselement kann beispielsweise als eine Fixierung oder als ein Spannelement ausgebildet sein.

Bei der beschriebenen Lösung ist somit insbesondere vorgesehen, dass das Kopfteil auf dem Druckbehälter, insbesondere auf einem oberen Bereich des Druckbehälters, angeordnet ist. Dieser obere Bereich ist ein Öffnungs- bzw. Ventilbereich des Druckbehälters, da hier eine Öffnung zum Einfüllen und Entnehmen des Gases vorgesehen ist, welche mit einem Ventil verschlossen ist. Die Verbindung des Druckbehälters als Trägerelement mit dem Kopfteil erfolgt beispielsweise durch Einschrauben des Druckbehälteranschlussgewindes bzw. durch Einschieben des Druckbehälteranschlusses in das Kopfteil, d. h. in dessen Druckbehälteraufnahmeteil.

Der Standfuß ist auf einem unteren Bereich, d. h. auf einem Bodenbereich, des Druckbehälters, auch als Flaschengrund des als Gaskartusche ausgebildeten Druckbehälters bezeichnet, angeordnet, insbesondere auf diesen aufgesteckt. Der Standfuß verhindert ein Umkippen des Getränkesprudlers. Die Verbindung des Druckbehälters mit dem Standfuß erfolgt beispielsweise durch Fixierungen und/oder Spannelemente im Standfuß.

Wie oben erwähnt, ist der Körper des Kopfteils insbesondere einstückig und/oder einteilig ausgebildet. Er enthält insbesondere nur die Betätigungseinheit, insbesondere einen Betätigungsknopf, und die insbesondere als Einschraubanschluss ausgebildete Getränkebehälteraufnahme für den insbesondere als Flasche ausgebildeten Getränkebehälter als separate Komponenten.

Der insbesondere als Gaskartusche ausgebildete Druckbehälter kann beispielsweise ein herkömmlicher, d. h. aus dem Stand der Technik bereits bekannter und insbesondere im Handel erhältlicher, Druckbehälter sein. Alternativ kann auch vorgesehen sein, dass ein aus dem Stand der Technik noch nicht bekannter Druckbehälter verwendet wird.

Der Druckbehälter kann beispielsweise, zusätzlich zum Gas, insbesondere Kohlenstoffdioxid, auch mit einem Aroma befüllt sein, um durch das Sprudeln das Getränk auch gleichzeitig zu aromatisieren. Beispielsweise kann vorgesehen sein, dass eine Außenseite vollständig oder abschnittsweise mindestens eine farbige Markierung aufweist, die auf der Außenseite des Druckbehälters angeordnet oder ausgebildet ist. Diese farbige Markierung ist beispielsweise zur Erkennung des Aromas vorgesehen, welches im Druckbehälter eingefüllt ist.

Der Druckbehälter weist beispielsweise einen Behälterkörper mit einem an einem unteren Ende angeordneten und insbesondere einstückig und/oder einteilig mit dem Behälterkörper ausgebildeten Behälterboden auf. An einem oberen und somit dem Behälterboden gegenüberliegenden Ende weist der Behälterkörper einen Endbereich auf, welcher insbesondere einstückig und/oder einteilig mit dem Behälterkörper ausgebildet ist. Der Endbereich weist eine Behälteröffnung auf, in und/oder auf der ein Ventil angeordnet oder anordbar ist.

Ausführungsbeispiele der Erfindung werden im Folgenden anhand von Zeichnungen näher erläutert.

Darin zeigen:
- Figur 1: schematisch eine Seitenansicht eines Getränkesprudlers, und
- Figur 2: schematisch eine perspektivische Darstellung des Getränkesprudlers.

Einander entsprechende Teile sind in allen Figuren mit den gleichen Bezugszeichen versehen.

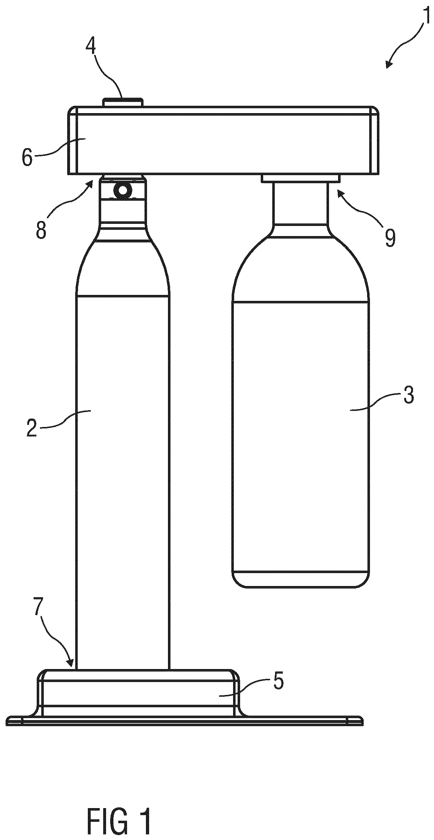

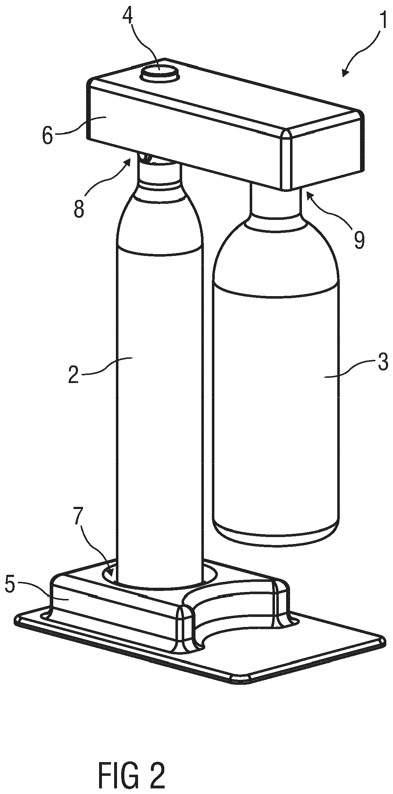

Figur 1 zeigt eine Seitenansicht eines Getränkesprudlers 1. Figur 2 zeigt den Getränkesprudler 1 in einer perspektivischen Darstellung.

Der Getränkesprudler 1, auch als Wassersprudler oder Trinkwassersprudler bezeichnet, weist eine Grundeinheit auf. Diese Grundeinheit umfasst eine Druckbehälteraufnahme zur Aufnahme eines Druckbehälters 2, eine Getränkebehälteraufnahme 9 zur Aufnahme eines Getränkebehälters 3 und eine Betätigungseinheit 4 zum Öffnen einer fluidischen Verbindung zwischen dem in der Druckbehälteraufnahme angeordneten Druckbehälter 2 und dem in der Getränkebehälteraufnahme 9 angeordneten Getränkebehälter 3, wenn, wie hier dargestellt, beide Behälter 2, 3 in der jeweiligen Aufnahme angeordnet sind. Der Druckbehälter 2 wird auch als Druckgasbehälter, Gaskartusche, Zylinder oder Gaszylinder bezeichnet. Der Getränkebehälter 3 ist insbesondere eine Flasche.

Bei der hier beschriebenen Lösung ist die Grundeinheit nicht als ein einzelnes Teil ausgebildet, sondern weist einen Standfuß 5 und ein, insbesondere flaches, Kopfteil 6 als separate Komponenten auf. Die Druckbehälteraufnahme zur Aufnahme des Druckbehälters 2 ist durch einen Druckbehälteraufnahmeteil 7 im Standfuß 5 und einen Druckbehälteraufnahmeteil 8 im Kopfteil 6 gebildet. Diese separaten Komponenten der Grundeinheit, d. h. der Standfuß 5 und das Kopfteil 6, sind somit nicht direkt miteinander verbunden, d. h. sie sind ohne den Druckbehälter 2 nicht miteinander verbunden, sondern zwei separate Einzelteile. Erst durch die Anordnung des Druckbehälters 2 in der Druckbehälteraufnahme, d. h. im Druckbehälteraufnahmeteil 7 des Standfußes 5 und im Druckbehälteraufnahmeteil 8 des Kopfteils 6, sind der Standfuß 5 und das Kopfteil 6 über den Druckbehälter 2, insbesondere ausschließlich über den Druckbehälter 2, miteinander verbunden.

Es ist daher insbesondere vorgesehen, dass der Getränkesprudler 1 auch den Druckbehälter 2 aufweist, wobei der Druckbehälter 2 in der Druckbehälteraufnahme, d. h. im Druckbehälteraufnahmeteil 7 des Standfußes 5 und im Druckbehälteraufnahmeteil 8 des Kopfteils 6, angeordnet ist, wie in den Figuren 1 und 2 dargestellt.

Die hier beschriebene Lösung ist eine sehr einfache und ressourcensparende Ausfertigung des Getränkesprudlers 1, da ein wichtiges Trägerelement, eine Standsäule, durch den Druckbehälter 2 gebildet wird, so dass dieses Trägerelement nicht zusätzlich erforderlich ist. Durch diese Konzentration auf die absolut notwendigen Funktionselemente ist der Getränkesprudler 1 besonders kostengünstig herstellbar und erfordert zudem nur einen sehr geringen Bauraum zum Aufstellen, wodurch er auch in sehr kleinen Küchen einsetzbar ist.

Im dargestellten Beispiel weist der Getränkesprudler 1 auch den Getränkebehälter 3 auf, welcher hier bereits in der Getränkebehälteraufnahme 9 angeordnet ist.

Das Kopfteil 6 weist insbesondere einen, insbesondere flachen, einteilig und/oder einstückig ausgebildeten Körper und die Betätigungseinheit 4 auf. D. h. die Betätigungseinheit 4 gehört nicht zum einteilig und/oder einstückig ausgebildeten Körper, sondern ist an diesem angeordnet und betätigbar befestigt. Der Druckbehälteraufnahmeteil 8 ist beispielsweise im Kopfteil 6 einteilig und/oder einstückig mit dem Körper des Kopfteils 6 ausgebildet.

Die Getränkebehälteraufnahme 9 ist vollständig im und/oder am Kopfteil 6 ausgebildet oder angeordnet. D. h. der Getränkebehälter 3 bildet keine Verbindung zwischen Kopfteil 6 und Standfuß 5, sondern wird zum Sprudeln eines darin eingefüllten Getränks ausschließlich am Kopfteil 6 befestigt, wie in den Figuren 1 und 2 ersichtlich. Beispielsweise ist die Getränkebehälteraufnahme 9 nicht einteilig oder einstückig mit dem Körper des Kopfteils 6 ausgebildet, sondern als ein separates Bauteil ausgebildet und am Körper des Kopfteils 6 befestigt.

Die Getränkebehälteraufnahme 9 weist beispielsweise ein Gewinde zum Einschrauben eines korrespondierenden Getränkebehälteranschlussgewindes, welches am Getränkebehälter 3 angeordnet oder ausgebildet ist, auf. Sie ist somit als ein Einschraubanschluss für den Getränkebehälter 3 ausgebildet. Das Getränkebehälteranschlussgewinde ist insbesondere in einem oberen Bereich des Getränkebehälters 3 angeordnet oder ausgebildet, beispielsweise an einem Flaschenhals des als Flasche ausgebildeten Getränkebehälters 3. Das Gewinde der Getränkebehälteraufnahme 9 ist beispielsweise ein Innengewinde und das korrespondierende Getränkebehälteranschlussgewinde ein Außengewinde. Alternativ dazu sind auch andere Formen der Verbindung des Getränkebehälters 3 mit der Getränkebehälteraufnahme 9 möglich, beispielsweise ein Bajonettverschluss oder eine Rastverbindung.

Beispielsweise ist vorgesehen, dass der Druckbehälteraufnahmeteil 8 im Kopfteil 6 ein Gewinde zum Einschrauben eines korrespondierenden Druckbehälteranschlussgewindes, welches am Druckbehälter 2 angeordnet oder ausgebildet ist, aufweist. Alternativ ist beispielsweise vorgesehen, dass der Druckbehälteraufnahmeteil 8 im Kopfteil 6 eine Einrastaufnahme zum Einschieben und Einrasten eines korrespondierenden Druckbehälteranschlusses, welcher am Druckbehälter 2 ausgebildet oder angeordnet ist, aufweist.

Der Druckbehälteraufnahmeteil 7 im Standfuß 5 weist mindestens ein Befestigungselement oder mehrere Befestigungselemente zur formschlüssigen und/oder kraftschlüssigen Befestigung des im Druckbehälteraufnahmeteil 7 im Standfuß 5 angeordneten Druckbehälters 2 auf. Das Befestigungselement oder das jeweilige Befestigungselement kann beispielsweise als eine Fixierung oder als ein Spannelement ausgebildet sein.

Bei der dargestellten und beschriebenen Lösung ist somit insbesondere vorgesehen, dass das Kopfteil 6 auf dem Druckbehälter 2, insbesondere auf einem oberen Bereich des Druckbehälters 2, angeordnet ist. Die Verbindung des Druckbehälters 2 als Trägerelement mit dem Kopfteil 6 erfolgt beispielsweise durch Einschrauben des Druckbehälteranschlussgewindes bzw. durch Einschieben des Druckbehälteranschlusses in das Kopfteil 6, d. h. in dessen Druckbehälteraufnahmeteil 8.

Der Standfuß 5 ist auf einem unteren Bereich, d. h. auf einem Bodenbereich, des Druckbehälters 2, auch als Flaschengrund des als Gaskartusche ausgebildeten Druckbehälters 2 bezeichnet, angeordnet, insbesondere auf diesen aufgesteckt. Der Standfuß 5 verhindert ein Umkippen des Getränkesprudlers 1. Die Verbindung des Druckbehälters 2 mit dem Standfuß 5 erfolgt beispielsweise durch Fixierungen und/oder Spannelemente im Standfuß 5.

Wie oben erwähnt, ist der Körper des Kopfteils 6 insbesondere einstückig und/oder einteilig ausgebildet. Er enthält insbesondere nur die Betätigungseinheit 4, insbesondere einen Betätigungsknopf, und die insbesondere als Einschraubanschluss ausgebildete Getränkebehälteraufnahme 9 für den insbesondere als Flasche ausgebildeten Getränkebehälter 3 als separate Komponenten. Der Druckbehälteraufnahmeteil 8 im Kopfteil 6 ist einteilig und/oder einstückig mit dem Körper des Kopfteils 6 ausgebildet.

### BEZUGSZEICHENLISTE

- 1: Getränkesprudler
- 2: Druckbehälter
- 3: Getränkebehälter
- 4: Betätigungseinheit
- 5: Standfuß
- 6: Kopfteil
- 7: Druckbehälteraufnahmeteil im Standfuß
- 8: Druckbehälteraufnahmeteil im Kopfteil
- 9: Getränkebehälteraufnahme

## Patentansprüche

1. Getränkesprudler (1) mit einer Grundeinheit, wobei die Grundeinheit aufweist:
- eine Druckbehälteraufnahme zur Aufnahme eines Druckbehälters (2),
- eine Getränkebehälteraufnahme (9) zur Aufnahme eines Getränkebehälters (3), und
- eine Betätigungseinheit (4) zum Öffnen einer fluidischen Verbindung zwischen dem in der Druckbehälteraufnahme angeordneten Druckbehälter (2) und dem in der Getränkebehälteraufnahme (9) angeordneten Getränkebehälter (3),
**dadurch gekennzeichnet, dass**
- die Grundeinheit einen Standfuß (5) und ein Kopfteil (6) als separate Komponenten aufweist,
- die Druckbehälteraufnahme zur Aufnahme des Druckbehälters (2) durch einen Druckbehälteraufnahmeteil (7) im Standfuß (5) und einen Druckbehälteraufnahmeteil (8) im Kopfteil (6) gebildet ist.

2. Getränkesprudler (1) nach Anspruch 1,
**dadurch gekennzeichnet, dass** der Druckbehälter (2) in der Druckbehälteraufnahme angeordnet ist, wobei der Standfuß (5) und das Kopfteil (6) über den Druckbehälter (2) miteinander verbunden sind.

3. Getränkesprudler (1) nach einem der vorhergehenden Ansprüche,
**dadurch gekennzeichnet, dass** der Getränkebehälter (3) in der Getränkebehälteraufnahme (9) angeordnet ist.

4. Getränkesprudler (1) nach einem der vorhergehenden Ansprüche,
**dadurch gekennzeichnet, dass** das Kopfteil (6) einen einteilig und/oder einstückig ausgebildeten Körper und die Betätigungseinheit (4) aufweist.

5. Getränkesprudler (1) nach Anspruch 4,
**dadurch gekennzeichnet, dass** der Druckbehälteraufnahmeteil (8) im Kopfteil (6) einteilig und/oder einstückig mit dem Körper des Kopfteils (6) ausgebildet ist.

6. Getränkesprudler (1) nach einem der vorhergehenden Ansprüche,
**dadurch gekennzeichnet, dass** die Getränkebehälteraufnahme (9) vollständig im und/oder am Kopfteil (6) ausgebildet oder angeordnet ist.

7. Getränkesprudler (1) nach einem der vorhergehenden Ansprüche,
**dadurch gekennzeichnet, dass** die Getränkebehälteraufnahme (9) ein Gewinde zum Einschrauben eines korrespondierenden Getränkebehälteranschlussgewindes, welches am Getränkebehälter (3) angeordnet oder ausgebildet ist, aufweist.

8. Getränkesprudler (1) nach einem der vorhergehenden Ansprüche,
**dadurch gekennzeichnet, dass** der Druckbehälteraufnahmeteil (8) im Kopfteil (6) aufweist:
- ein Gewinde zum Einschrauben eines korrespondierenden Druckbehälteranschlussgewindes, welches am Druckbehälter (2) angeordnet oder ausgebildet ist, oder
- eine Einrastaufnahme zum Einrasten eines korrespondierenden Druckbehälteranschlusses, welcher am Druckbehälter (2) ausgebildet oder angeordnet ist.

9. Getränkesprudler (1) nach einem der vorhergehenden Ansprüche,
**dadurch gekennzeichnet, dass** der Druckbehälteraufnahmeteil (7) im Standfuß (5) mindestens ein Befestigungselement zur formschlüssigen und/oder kraftschlüssigen Befestigung des im Druckbehälteraufnahmeteil (7) im Standfuß (5) angeordneten Druckbehälters (2) aufweist.
